**Europäisches Patentamt**

**European Patent Office**

**Office européen des brevets**

(19)

(11) Veröffentlichungsnummer : **0 003 621**
**B1**

(12) # EUROPÄISCHE PATENTSCHRIFT

(45) Veröffentlichungstag der Patentschrift :
09.06.82

(51) Int. Cl.³ : **G 03 B 15/05, G 03 B 7/16**

(21) Anmeldenummer : **79200044.0**

(22) Anmeldetag : **24.01.79**

(54) Elektronenblitzgerät/Kamera-Kombination.

(30) Priorität : **04.02.78 DE 2804886**

(43) Veröffentlichungstag der Anmeldung :
**22.08.79 (Patentblatt 79/17)**

(45) Bekanntmachung des Hinweises auf die Patenterteilung : **09.06.82 Patentblatt 82/23**

(84) Benannte Vertragsstaaten :
**CH FR GB**

(56) Entgegenhaltungen :
**DE - B - 1 797 078**
**DE - B - 1 797 079**
**DE - U - 7 422 936**
**US - A - 3 846 806**

(73) Patentinhaber : **ROBERT BOSCH GMBH**
**Postfach 50**
**D-7000 Stuttgart 1 (DE)**

(72) Erfinder : **Gahler, Egon**
**Hülshoffweg 7**
**D-6234 Hattersheim (DE)**

Imprimerie Jouve, 18, rue St-Denis, 75001 Paris, France

## Elektronenblitzgerät/Kamera-Kombination

Die Erfindung betrifft eine Elektronenblitzgerät/Kamera-Kombination gemäß dem Oberbegriff des Anspruchs 1 oder 2.

Bei modernen Elektronenblitzgeräten wird in der Regel zwischen Geräten mit und Geräten ohne eingebautem Computer unterschieden. Bei Elektronenblitzgeräten ohne Computer wird bei jedem Blitzvorgang die ganze im Blitzkondensator gespeicherte Energie der Blitzlampe zugeführt, d.h. die Helligkeit eines Blitzes ist bei jedem Blitzvorgang dieselbe. Um die Helligkeit des Blitzes in Abhängigkeit von der Entfernung des aufzunehmenden Objekts oder von der an der Kamera eingestellten Blende variieren zu können, sind sogenannte Computerblitzgeräte vorgeschlagen worden, die einen lichtempfindlichen Sensor aufweisen, über den bei Erreichen einer vorgegebenen Lichtmengenschwelle des reflektierten Lichts die Blitzlampe abgeschaltet wird. Diese sogenannten Computerblitzgeräte werden wiederum in Parallel- und Serienblitzgeräte unterteilt, wobei die Parallelblitzgeräte einen Schalter parallel zur Blitzlampe aufweisen, während bei den Serienblitzgeräten dieser Schalter in Reihe mit der Blitzlampe geschaltet ist. Im Gegensatz zu den Parallelblitzgeräten wird bei den Serienblitzgeräten der Blitzkondensator nicht bei jedem Blitzvorgang vollständig entladen, weil der Schalter, der bei Erreichen der Lichtschwelle geschlossen wird, die Stromzufuhr zur Blitzlampe sperrt. Die Serienblitzgeräte sind somit energiesparend, d.h. es lassen sich mit denselben Batterien oder Akkumulatoren mehr Blitze als bei Parallelblitzgeräten herausholen.

Den gerade beschriebenen Typen von Elektronenblitzgeräten ist gemeinsam, daß sie alle wesentlichen Bauelemente selbst aufweisen und somit in gewissem Sinne autonom arbeiten. Die Funktion der Verbindung zur Kamera besteht lediglich darin, während des geöffneten Kameraverschlusses ein Betätigungssignal an das Blitzgerät zu geben.

Neben diesen quasiautonomen Blitzgeräten gibt es aber auch Computerblitzgeräte, welche von einem Sensor aus gesteuert werden können, der sich in der Kamera befindet.

Aus der DE-B-1 797 079 ist die Kombination eines Elektronenblitzgerätes mit einer fotografischen Kamera bekannt, bei der das Elektronenblitzgerät eine Blitzlampe und ein lichtempfindliches Element zur Erfassung des von der Blitzlampe ausgesandten und auf dieses Element reflektierten Lichts sowie eine Blitzsteuerschaltung zum Löschen der gezündeten Blitzlampe nach Erreichen einer einstellbaren Lichtmengenschwelle des reflektierten Lichts und einen oder mehrere Anschlüsse für die Verbindung des Elektronenblitzgerätes mit einer Kamera aufweist. Die Kamera enthält einen lichtempfindlichen Sensor zum Erfassen des durch das Objektiv der Kamera fallenden Lichts, wobei dieser Sensor über einen Kameraanschluß ein Signal abgibt, das für die Steuerung des Elektronenblitzgerätes verwendbar ist. Weiterhin sind bei dieser bekannten Anordnung eine Verbindung zwischen den Kameraseitigen Blitzgeräteanschlüssen und dem Elektronenblitzgerät sowie Umschalter vorgesehen, mit denen von dem Blitzgeräte-internen lichtempfindlichen Element auf den Kamera-internen Sensor bzw. umgekehrt umgeschaltet werden kann.

Aus der DE-B-1 797 078 ist eine Elektronenblitzgerät/Kamera-Kombination bekannt, bei der die kameraseitigen Blitzgeräteanschlüsse einen Kontakt zur Blitzauslösung und einen Kontakt zur Blitzabschaltung aufweisen. Beide Kontakte sind mit der Entladungsblitzlampe verbunden und dienen der Blitzauslösung bzw. Blitzabschaltung. Das Lichtempfindliche Element zur Blitzsteuerung befindet sich hier in der Kamera.

Aufgabe der vorliegenden Erfindung ist es, für eine Elektronenblitzgerät/Kamera-Kombination eine Verbindungs- und Anpassungsschaltung zu schaffen, mit der die Blitzsteuerung des Elektronenblitzgerätes sowohl über eine im Elektronenblitzgerät eingebaute Blitzsteuerschaltung mit zugetrorigem Lichtempfindlichen Element als auch über eine in der Kamera eingebaute Blitzsteuerschaltung miteinem durch das Kameraobjektiv fallende Licht erfassenden Sensor möglich ist.

Diese Aufgabe wird erfindungsgemäß durch die Kennzeichen der Ansprüche 1 und 2 gelöst.

Mit der erfindungsgemäßen Verbindungs- und Anpassungsschaltung können handelsübliche computergesteuerte Elektronenblitzgeräte an innengesteuerte Kameras angeschlossen und optimal angepaßt werden.

Ausführungsbeispiele der Erfindung sind in der Zeichnung dargestellt und werden im folgenden näher beschrieben. Es zeigen :

Figur 1 eine Schaltungsanordnung für ein Computerblitzgerät, an das ein externer sensor anschließbar ist ;

Figur 2 eine Schaltungsanordnung für ein Computerblitzgerät ohne externen Sensor.

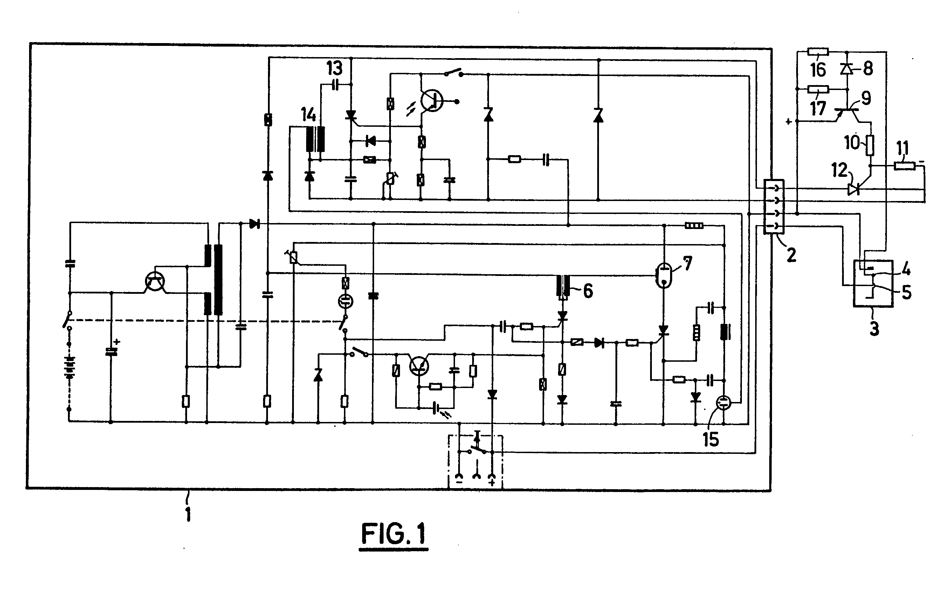

In der Fig. 1 ist die Schaltung 1 eines an sich bekannten Elektronenblitzgeräts (vergleiche Technische Information BRAUN 380 BVC, Ausgabe 10, 1976) dargestellt, deren Funktionsweise deshalb nur soweit beschrieben wird, wie es zum Verständnis der Erfindung notwendig ist.

Dieses bekannte Elektronenblitzgerät weist einen Anschluß 2 für einen externen Sensor auf. Derartige externe Sensoren werden stets dann verwendet, wenn das reflektierte Blitzlicht an einer vom Blitzgerät entfernten Stelle gemessen werden soll.

Mittels eines Verbindungskabels wird ein solcher externer Sensor, der im wesentlichen ein lichtempfindliches Element enthält, mit dem Anschluß 2 verbunden, so daß die Abschaltung der Blitzlampe des Blitzgeräts über dem externen Sensor erfolgt.

Bei der vorliegenden Erfindung wird nun der bereits vorhandene Anschluß 2 dazu verwendet, eine Adapterschaltung für Kameras mit eingebauter Blitzsteuerung anzuschließen.

Der Anschlußschuh 3 einer solchen Kamera ist so ausgebildet, saß er einen Kontakt 4 zum Abschalten des Blitzes und einen Kontakt 5 zur Blitzauslösung aufweist.

Wird das Blitzgerät auf eine Kamera mit Innenauslösung gesteckt und eine Aufnahme ausgelöst, so wird dabei auch der Kontakt 5 ausgelöst. Stellt nun der in der Kamera befindliche lichtempfindliche Sensor fest, daß das reflektierte Blitzlicht einen voreingestellten Wert überschreitet, so gibt die Kamera am Kontakt 4 einen negativen Impuls ab, der über die Diode 8 an die Basis des Transistors 9 gelangt. Der Transistor 9 wird hierauf leitend und bewirkt über die Widerstände 10 und 11 ein Durchschalten des Thyristors 12. Dies wiederum bewirkt, daß der Kondensator 13 im Blitzgerät über den Zündtransformator 14 entladen wird. Der auf der Sekundärseite dieses Zündtransformators 14 auftretende Hochspannungsimpuls verursacht über die Ansteuerung einer Schaltröhre 15 und weiterer Schaltelemente in an sich bekannter Weise die Abschaltung der Blitzröhre 7.

Der Widerstand 16 dient zur Anpassung des Blitzgeräts an die Kamera, während der Widerstand 17 den Arbeitswiderstand des Transistors 9 bildet.

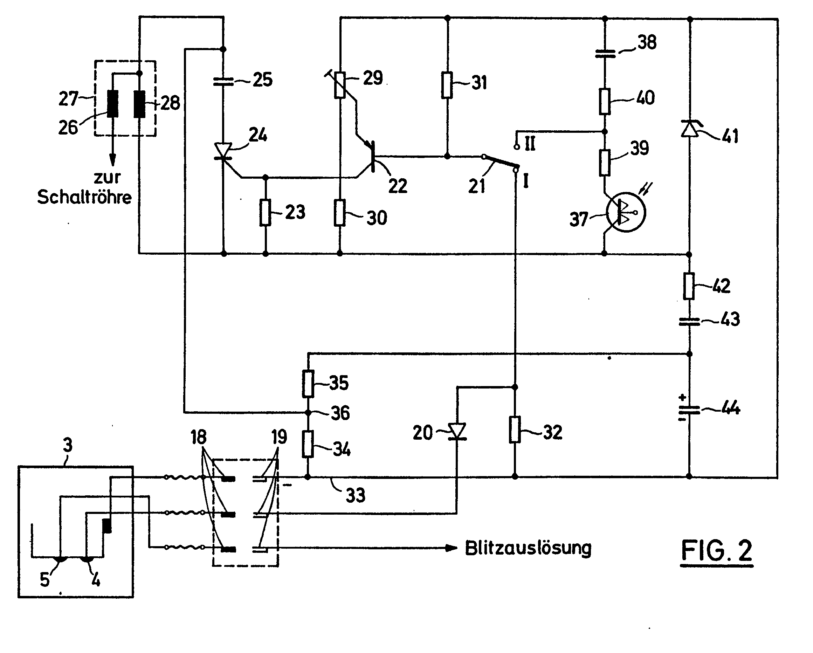

In der Fig. 2 ist eine Schaltungsanordnung dargestellt, die für ein Blitzgerät geeignet ist, das direkt mit einer Kamera mit Innensteuerung gekoppelt ist. Der Anschlußschuh 3 der Kamera ist hierbei mit einem Synchronstecker 18 gekoppelt, der in entsprechende Anschlüsse 19 des Blitzgeräts gesteckt werden kann. Das Blitzgerät kann dabei sowohl mit Kameras ohne Innensteuerung als auch mit Kameras mit Innensteuerung verwendet werden, indem eine entsprechende Umschalteinrichtung vorgesehen ist.

Die Blitzauslösung erfolgt wieder über den Kontakt 5 des Anschlußschuhs 3 sowie über einen Pol des Synchronsteckers 18 und einen der Anschlüsse 19. Da die weiteren Wirkungen eines Blitzauslöseimpulses bekannt sind, sind die dem Anschluß 19 nachgeschalteten Elemente in der Fig. 2 nicht näher dargestellt.

Der Impuls zum Beendigen des Blitzes wird wieder vom Kontakt 4 abgegeben. Dieser Impuls gelangt über die Diode 20 zu dem Schalter 21 und wenn sich dieser Schalter in der Stellung befindet, die in der Fig. 2 dargestellt ist, wird der Impuls auf die Basis eines Transistors 22 gegeben. Hierdurch wird der Transistor 22 leitend, d.h. es fließt ein Kollektorstrom, der am Widerstand 23 einen Spannungsabfall erzeugt. Aufgrund dieses Spannungsabfalls zündet der Thyristor 24 und entlädt den Kondensator 25 über die Primärwicklung 28 eines Zündtransformators 27. An der Sekundärwicklung dieses Transformators 27 entsteht hierauf ein Impuls, welcher auf die Schaltröhre gegeben wird. Die mit der Sekundärwicklung 26 verbundenen Schaltelemente sind im einzelnen bekannt und werden deshalb in der Fig. 2 nicht näher dargestellt.

Der aus den Widerständen 29, 30 bestehende Spannungsteiler dient zur Einstellung der Spannung am Transistor 22 ; mit Hilfe des Widerstandes 29, der ein veränderbarer Widerstand ist, kann diese Spannung verändert werden. Zwischen dem einen Anschluß des Widerstands 29 und der Basis des Transistors 22 liegt der Transistor-Arbeitswiderstand 31.

Die Anpassung des Blitzgeräts an die jeweilige Kamera erfolgt mit Hilfe eines Abschlußwiderstands 32, der mit seinem einen Anschluß mit der Anode der Diode 20, mit seinem anderen Anschluß mit Masse 33 verbunden ist. An Masse liegt auch ein aus zwei Widerständen 34, 35 bestehenden Spannungsteiler, dessen Mittelpunkt 36 an die Verbindungsleitung zwischen Kondensator 25 und Primärwicklung 28 angeschlossen ist. Mit diesem Spannungsteiler wird eine relativ niedrige Spannung für den Kondensator 25 erzeugt.

Wird nun der Schalter 21 von seiner Stellung I in die Stellung II umgeschaltet, so arbeitet das Blitzgerät autonom, d.h. losgelöst von der Kamera. Dieser autonome Betrieb ist bekannt und wird deshalb im folgenden nur verkürzt dargestellt.

Der in dem Blitzgerät befindliche lichtelektrische Sensor 37 lädt bei auffallendem Licht einen Kondensator 38 über zwei Widerstände 49, 40 auf, von denen der Widerstand 40 zur Anpassung bei kleinen Aufnahme-Entfernungen dient. Die Versorgungsspannung für die aus den Elementen 37, 39, 40, 38 bestehende Computer-Einrichtung wird über eine Zener-Diode 41 gewonnen, die über einen Widerstand 42 und einen Kondensator 43 mit einem Blitz-Elektrolytkondensator 44 verbunden ist. Dieser Kondensator 44 entlädt sich bei Zündung des Blitzgeräts über die in der Fig. 2 nicht gezeigte Blitzlampe. Die zwischen dem Kondensator 44 und der Blitzlampe noch vorgesehenen Schaltungen sind der Einfachheit halber in der Fig. 2 ebenfalls nicht dargestellt. Hat die Spannung am Kondensator 38 aufgrund der Ladung durch das lichtempfindliche Element 37 einen bestimmten Schwellwert erreicht, so schaltet der Transistor 22 durch und zündet den Thyristor 24. Die Abschaltung des Blitzes erfolgt dann auf die gleiche Weise wie zuvor beschrieben.

## Ansprüche

1. Elektronenblitzgerät/Kamera-Kombination mit einem Eltronenblitzgerät das eine Blitzlampe (7) und ein lichtempfindliches Element zur Erfassung des von der Blitzlampe (7) ausgesandten und auf dieses Element reflektierten Lichts sowie eine Blitzsteuerschaltung zum Löschen der gezündeten Blitzlampe (7) nach Erreichen einer einstellbaren Lichtmengenschwelle des reflektierten Lichts und Anschlüsse (2, 19) für die Verbindung des Elektronenblitzgerätes mit einer Kamera aufweist, die einen lichtempfindlichen Sensor zum Erfassen des durch das Objektiv der Kamera fallenden Lichts enthält, wobei dieser Sensor über einen Kameraanschluß ein Signal abgibt, das für die Steuerung des Elektronenblitzgeräts verwendbar ist ; und mit einer Verbindung zwischen den kameraseitigen Blitzgeräteanschlüssen (4, 5) und Elektronenblitzgerät, dadurch gekennzeichnet, daß an die Elektronenblitzgerät Anschlüße (2) eine elektrische Adapterschaltung (8-12, 16, 17) zur Verbindung der kameraseitigen Blitzgeräteanschlüsse (4, 5) mit dem Elektronenblitzgerät angeschlossen ist, daß die kameraseitigen Blitzgeräteanschlüsse (4, 5) einen Kontakt (5) zur Blitzauslösung und einen Kontakt (4) zur Blitzabschaltung aufweisen, dass das vom Kontakt (5) zur Blitzauslösung abgegebene Signal den Zündtransformator (6) der Blitzlampe (7) und das vom Kontakt (4) zur Blitzabschaltung abgegebene Signal die Steuerelektrode des in Serie mit der Blitzlampe (7) liegenden Schalters steuert, indem der kameraseitige Kontakt (4) zur Blitzabschaltung ein negatives Spannungspotential abgibt, welches in der Adapterschaltung über eine Diode (8) der Basis eines Transistors (9) zugeführt wird und diesen Transistor (9) ansteuert, worauf die mit dem Kollektor dieses Transistors (9) verbundenen Steuerelektrode eines elektronischen Schalters (12) mit einem Signal beaufschlagt wird, der hierauf durchschaltet und in der Blitzsteuerschaltung die Entladung eines Kondensators (13) über die Primärwicklung eines Transformators (14) bewirkt, dessen Sekundärwicklung einen Impuls auf die Steuerelektrode eines weiteren steuerbaren Schalters (15) gibt und hierdurch eine Kommutierungsschaltung zum Ausschalten des mit der Blitzlampe (7) in Reihe geschalteten elektronischen Schalters veranlaßt.

2. Elektronenblitzgerät/Kamera-Kombination mit einem Elektronenblitzgerät, das eine Blitzlampe (7) und ein lichtempfindliches Element zur Erfassung des von der Blitzlampe (7) ausgesandten und auf dieses Element reflektierten Lichts sowie eine Blitzsteuerschaltung zum Löschen der gezündeten Blitzlampe (7) nach Erreichen einer einstellbaren Lichtmengenschwelle des reflektierten Lichts und Anschlüsse (2, 19) für die Verbindung des Elektronenblitzgerätes mit einer Kamera aufweist, die einen lichtempfindlichen Sensor zum Erfassen des durch das Objektiv der Kamera fallenden Lichts enthält, wobei dieser Sensor über einen Kameraanschluß ein Signal abgibt, das für die Steuerung des Elektronenblitzgeräts verwendbar ist ; und mit einer Verbindung zwischen den kameraseitigen Blitzgeräteanschlüssen (4, 5) und dem Elektronenblitzgerät und mit einem Umschalter (21), mit dem von dem Blitzgeräte-internen lichtempfindlichen Element auf den Kamera-internen Sensor bzw. umgekehrt umgeschaltet werden kann, dadurch gekennzeichnet, daß die kameraseitigen Blitzgeräte-Anschlüsse (4, 5) einen Kontakt (5) zur Blitzauslösung und einen Kontakt (4) zur Blitzabschaltung aufweisen, dass das vom Kontakt (5) zur Blitzauslösung abgegebene Signal den Zündtransformator der Blitzlampe und das vom Kontakt (4) zur Blitzabschaltung abgegebene Signal die Steuerelektrode des in Serie mit der Blitzlampe liegenden Schalters steuert, und daß der Umschalter (21) zum Umschalten von einer Blitzgeräteinternen Stellung (I) auf eine Blitzgeräte-externe Stellung (II) und umgekehrt mit der Basis eines Transistors (22) verbunden ist, dessen Kollektor an der Steuerelektrode eines Thyristors (24) liegt, wobei der durchgeschaltete Thyristor einen Kondensator (25) über die Primärwicklung (26) eines Transformators (27) entlädt.

3. Elektronenblitzgerät/Kamera-Kombination nach Anspruch 2, dadurch gekennzeichnet, daß der Umschalter (21) zum Umschalten von einer Blitzgeräte-internen Stellung (I) auf eine Blitzgeräte-externe Stellung (II) und umgekehrt in seiner einen Stellung (I) die Transistorbasis über eine Diode (20) mit einem in einem Blitzschuh (3) der Kamera befindlichen Anschluß (4) verbindet, während er in seiner anderen Stellung (II) die Transistorbasis mit einem Punkt zwischen dem lichtempfindlichen Sensor (37) und einem Kondensator (38) verbindet.

**Claims**

1. Electronic flash/camera combination with an electronic flash having a flash lamp (7) and a light-sensitive element for detecting the light transmitted by flash lamp (7) and reflected onto said element, as well as a flash control circuit for extinguishing the ignited flash lamp (7) after reaching an adjustable brightness threshold of the reflected light and one or more connections (2, 19) for connecting the electronic flash to a camera containing a light-sensitive sensor for detecting the light passing through the camera lens, via a camera connection said sensor transmitting a signal usable for controlling the electronic flash, and with a connection between the camera-side flash connections (4, 5) and the electronic flash characterized in that to connection (2) is connected an electrical adapter circuit (8-12, 16, 17) for connecting the camera-side flash connections (4, 5) to the electronic flash, that the camera-side flash connections (4, 5) have a contact (5) for flash release and a contact (4) for flash switch-off, the flash release contact (5) being directly or indirectly connected to ignition transformer (6) of flash lamp (7) and the flash switch-off contact (4) being directly or indirectly connected to the control electrode of the switch in series with flash lamp (7), and that the camera-side flash switch-off contact (4) supplies a negative voltage potential supplied via a diode (8) of the base of a transistor (9) and controls the latter, a signal then being supplied to the control electrode of an electronic switch (12) connected to the collector of said transistor (9), leading to the switching through thereof and bringing about the discharge of a capacitor (13) across the primary winding of a transformer (14), whose secondary winding supplies a pulse to the control electrode of a further controllable switch (15), thereby causing a commutating circuit to switch off the electronic switch connected in series with flash lamp (7).

2. Electronic flash/camera combination with an electronic flash having a flash lamp (7) and a light-sensitive element for detecting the light transmitted by flash lamp (7) and reflected onto said element, as well as a flash control circuit for extinguishing the ignited flash lamp (7) after reaching an adjustable brightness threshold of the reflected light and one or more connections (2, 19) for connecting the electronic flash to a camera containing a light-sensitive sensor for detecting the light passing through the camera lens, via a camera connection said sensor transmitting a signal usable for controlling the electronic flash, and with a connection between the camera-side flash connections (4, 5) and the electronic flash and with a changeover switch permitting the switchover of the light-sensitive element within the flash to the sensor within the camera or vice-versa, characterized in that the camera-side flash connections (4,5) have a flash release contact (5) and a flashswitch-off contact (4), the flash release contact (5) being directly or indirectly connected to the ignition transformer of the flash lamp and the flash switch-off contact (4) being directly or indirectly connected to the control electrode of the switch in series with the flash lamp, and that change-over switch (21) is connected to the base of a transistor (22) for switching over from a flash-internal position (I) to a flash-external position (II) the collector of said transistor being positioned at the control electrode of a thyristor (24), the switched through thyristor (24) discharging a capacitor (25) via the primary winding (26) of a transformer (27).

3. Electronic flash/camera combination according to claim 2, characterized in that the changeover switch (21) for switching over from a flash-internal position (I) to a flash-external position (II) and vice-versa is connected in position (I) via a diode (20) with a flash shoe (3) of contact (4), whilst in its other position (II) changeover switch (21) is connected between a light-sensitive sensor (37) and a capacitor (38).

**Revendications**

1. Ensemble flash électronique-appareil photographique comprenant un flash électronique, qui comporte une lampe à éclats (7) et un élément photosensible pour la détermination de la lumière émise par la lampe à éclats (7) et réfléchie par ledit élément, un montage de commande d'éclair pour l'extinction de la lampe à éclats (7) allumée quand la lumière réfléchie atteint un seuil de luminosité ajustable, et une ou plusieurs connexions (2, 19) pour la liaison du flash électronique avec un appareil photographique, qui contient un capteur photosensible pour la détermination de la lumière traversant l'objectif de l'appareil, ledit capteur délivrant sur un contact de l'appareil un signal utilisable pour la commande du flash électronique ainsi qu'une liaison entre les contacts (4, 5) de flash sur l'appareil et le flash électronique, ledit ensemble étant caractérisé en ce qu'un montage électrique d'adaptation (8-12, 16, 17) est relié au connecteur (2) pour la liaison des contacts de flash (4, 5) sur l'appareil avec le flash électronique ; les contacts de flash (4, 5) sur l'appareil comprennent un contact (5) pour le déclenchement de l'éclair et un contact (4) pour la coupure de l'éclair, le contact (5) de déclenchement de l'éclair étant relié directement ou indirectement au transformateur d'allumage (6) de la lampe à éclats (7) et le contact (4) directement ou indirectement à l'électrode de commande de l'interrupteur monté en série avec la lampe à éclats (7) ; et le contact (4) de l'appareil pour la coupure de l'éclair délivre un potentiel négatif qu'une diode (8) applique à la base d'un transistor (9), de sorte que l'électrode de commande d'un interrupteur électronique (12), reliée au collecteur dudit transistor (9), reçoit un signal qui amène ledit interrupteur dans l'état passant et produit la décharge d'un condensateur (13) sur l'enroulement primaire d'un condensateur (14), dont l'enroulement secondaire délivre une impulsion à l'électrode de commande d'un second interrupteur commandé (15), produisant ainsi une commutation pour l'ouverture de l'interrupteur électronique branché en série avec la lampe à éclats (7).

2. Ensemble flash-électronique-appareil photographique comprenant un flash électronique, qui comporte une lampe à éclats (7) et un élément photosensible pour la détermination de la lumière émise par la lampe à éclats (7) et réfléchie par ledit élément, un montage de commande d'éclair pour l'extinction de la lampe à éclats (7) allumée quand la lumière réfléchie atteint un seuil de luminosité ajustable, et une ou plusieurs connexions (2, 19) pour la liaison du flash électronique avec un appareil photographique, qui contient un capteur photosensible pour la détermination de la lumière traversant l'objectif de l'appareil, ledit capteur délivrant sur un contact de l'appareil un signal utilisable pour la commande du flash électronique ; ainsi qu'une liaison entre les contacts (4, 5) de flash sur l'appareil électronique et le flash électronique, et un inverseur pour la commande de l'élément photosensible incorporé au flash sur le capteur incorporé à l'appareil ou inversement, ledit ensemble étant caractérisé en ce que les contacts (4, 5) de flash sur l'appareil comprennent un contact (5) pour le déclenchement de l'éclair et un contact (4) pour la coupure de l'éclair, le contact (5) de déclenchement de l'éclair étant relié directement ou indirectement au transformateur d'allumage de la lampe à éclats et le contact (4) de coupure de l'éclair directement ou indirectement à l'électrode de commande de l'interrupteur monté en série avec la lampe à éclats ; et l'inverseur (21) de commutation d'une position (I) interne au flash sur une position (II) externe au flash ou inversement est relié à la base d'un transistor (22) dont le collecteur est relié à l'électrode de commande d'un thyristor (24) qui, à l'état passant, décharge un condensateur (25) sur l'enroulement primaire (26) d'un transformateur (27).

3. Ensemble flash électronique-appareil photographique selon revendication 2, caractérisé en ce que l'inverseur (21) de commutation d'une position (I) interne au flash sur une position (II) externe au flash ou inversement est relié, sur sa première position (I) par une diode (20) à un contact (4) de la griffe (3) de l'appareil photographique, et est branché, sur sa seconde position (II), entre un capteur photosensible (37) et un condensateur (38).

FIG.1

0 003 621

FIG. 2